# EUROPÄISCHE PATENTSCHRIFT

(11) **EP 3 049 294 B1**
(45) Veröffentlichungstag und Bekanntmachung des Hinweises auf die Patenterteilung: **26.07.2017**
(21) Anmeldenummer: 14750144.9
(22) Anmeldetag: 31.07.2014
(51) Int. Cl.: B60T 8/36, B60T 8/48, B60T 13/68, B60T 15/20

(54) **ELEKTRONISCH-PNEUMATISCHE BREMSANLAGE, BEISPIELSWEISE FÜR EINEN LASTKRAFTWAGEN ODER LASTZUG**
ELECTRONIC-PNEUMATIC BRAKING SYSTEM, FOR EXAMPLE FOR A HEAVY GOODS VEHICLE OR ARTICULATED TRUCK
INSTALLATION DE FREINAGE ÉLECTRONICO-PNEUMATIQUE, PAR EXEMPLE POUR CAMIONS OU TRAINS ROUTIERS

(30) Priorität: 25.09.2013 DE 102013015972
(43) Veröffentlichungstag der Anmeldung: 03.08.2016
(73) Patentinhaber: WABCO GmbH, 30453 Hannover (DE)
(72) Erfinder: COUPPEE, Ulrich, 31863 Coppenbruegge (DE); KIEL, Bernd-Joachim, 31515 Wunstorf (DE)
(74) Vertreter: Lauerwald, Jörg
(86) Internationale Anmeldenummer: PCT/EP2014/002109
(87) Internationale Veröffentlichungsnummer: WO 2015/043695

(56) Entgegenhaltungen:
- EP-A1- 0 307 579
- DE-A1- 10 158 065
- US-A1- 2011 147 141

## Beschreibung

Die Erfindung betrifft eine elektronisch-pneumatische Bremsanlage gemäß dem Oberbegriff des Patentanspruchs 1.

In der Firmendruckschrift Nr. 815 020 194 3, Version 002/02.11, "Das Anti-Blockier-System (ABS) und die Antriebs-Schlupfregelung (ASR)" der Anmelderin, die im Internet unter http://inform.wabco-auto.com/intl/pdf/815/01/94/8150201943.pdf abrufbar ist, ist auf Seite 4 die Wirkungsweise einer Antriebs-Schlupf-Regelung (ASR) und auf Seite 5 die Wirkungsweise einer elektronischen Stabilitätskontrolle (ESC) beschrieben. Weiter ist auf Seite 16 der Aufbau einer DruckluftBremsanlage mit einem Anti-Blockier-System (ABS), einem Antriebs-Schlupf-Regelung (ASR) und einer elektronischen Stabilitätskontrolle (ESC) schematisch mit den wichtigsten Komponenten dargestellt. Aus dieser Darstellung ist erkennbar, dass für die genannten ABS-, ASR- und ESC-Funktionen jeweils an der Vorderachse und an der Antriebsachse eines Motorwagens zwei ABS-Magnetregelventile, ein pneumatisches Zweiwegeventil, ein pneumatisches Relaisventil und ein 3/2-Magnetwegeventil vorhanden sind. Vor allem das 3/2-Magnetwegeventil muss eine Nennweite aufweisen, die einen ungehinderten Durchfluss des von einem Luftbehälter kommenden Vorratsdrucks zum pneumatischen Zweiwegeventil und von dort zum pneumatischen Relaisventil ermöglicht. Dies ist erforderlich, weil im Falle einer ASR/ESC-Bremsung, also nicht im Fall einer normalen Betriebsbremsung, welche über ein Motorwagenbremsventil 4 eingeleitet und gesteuert wird, einzelne Räder des Fahrzeugs sehr schnell abgebremst und auch wieder freigegeben werden müssen. Die genanten Ventile sind als unabhängige Ventilelemente konstruiert und erfordern dementsprechend einen vergrößerten Bauaufwand, der mit erhöhten Kosten verbunden ist.

Vor diesem Hintergrund liegt der Erfindung die Aufgabe zugrunde, große Nennweiten in einem oder mehreren der Ventile in dem eingangs erwähnten ASR/ESC-Modulator zu reduzieren, um dadurch eine Baugrößenreduzierung und folglich eine Kosteneinsparung zu erreichen, ohne die geschilderte ASR- und ESC-Funktionen zu beeinträchtigen.

Gelöst wird diese Aufgabe durch eine elektronisch-pneumatischen Bremsanlage gemäß den Merkmalen des Hauptanspruchs, während in den Unteransprüchen vorteilhafte Ausführungsformen angegeben sind.

Demnach geht die Erfindung aus von einer elektronisch-pneumatische Bremsanlage für ein Fahrzeug, beispielsweise für einen Lastkraftwagen oder einen Lastzug, mit einem ASR/ESC-Modulator, mittels dem Steuerungsfunktionen für eine Antriebs-Schlupfregelung (ASR) und eine Fahrzeug-Stabilitätskontrolle (ESC) durchführbar sind, wobei der ASR/ESC-Modulator ein pneumatisches Relaisventil, ein Magnetventil und eine Umschalt-Ventileinrichtung aufweist.

Gemäß der Erfindung ist vorgesehen, dass das Relaisventil eine mit einem Ausgang der Umschalt-Ventileinrichtung verbundene Steuerkammer, einen ersten Anschluss als pneumatischen Eingang für einen Vorratsdruck aus einer Druckversorgung, einen zweiten Anschluss als pneumatischen Ausgang zu einer Radbremse und einen dritten Anschluss als Entlüftungsausgang für die Radbremse aufweist, dass das Magnetventil einen ersten Anschluss als pneumatischen Eingang für den Vorratsdruck aus einer Druckversorgung, einen zweiten Anschluss als pneumatischen Ausgang für den Vorratsdruck und einen dritten Anschluss als pneumatischen Entlüftungsausgang aufweist, dass die Umschalt-Ventileinrichtung einen ersten Anschluss als pneumatischen Eingang, an den ein Steuerdruck einer Betriebsbremse der elektronisch-pneumatischen Bremsanlage anlegbar ist, einen zweiten Anschluss als pneumatischen Eingang, an dem der Vorratsdruck aus einer Druckversorgung anlegbar ist, und einen dritten Anschluss als pneumatischen Ausgang aufweist, über den der Steuerkammer des Relaisventils der Steuerdruck zur Bildung eines elektronisch geregelten, pneumatischen Radbremsdrucks oder der Vorratsdruck zugeführt wird, dass die Umschalt-Ventileinrichtung zwei Schaltstellungen einnehmen kann, von denen die erste Schaltstellung den ersten, mit Steuerdruck beaufschlagten Anschluss an der Umschalt-Ventileinrichtung mit dem dritten Anschluss an der Umschalt-Ventileinrichtung verbindet, und von denen die zweite Schaltstellung den zweiten, über das Magnetventil mit Vorratsdruck beaufschlagbaren Anschluss an der Umschalt-Ventileinrichtung mit dem dritten Anschluss an der Umschalt-Ventileinrichtung verbindet, dass das Magnetventil so ausgebildet ist, dass es zur Ausführung einer ASR/ESC-Funktion aus seiner Ruhestellung in seine Betätigungsstellung geschaltet wird und dadurch die zweite Schaltstellung der Umschalt-Ventileinrichtung zumindest zeitweise herbeiführt, dass das durch den Vorratsdruck beaufschlagte pneumatische Relaisventil in der ersten Schaltstellung der Umschalt-Ventileinrichtung den elektronisch geregelten oder von einem Fußbremsventil gesteuerten pneumatischen, zum Steuerdruck proportionalen Radbremsdruck erzeugt, sowie in der zweiten Schaltstellung der Umschalt-Ventileinrichtung den Vorratsdruck als Radbremsdruck durchleitet, und dass eine erste Steuerkammer an der Umschalt-Ventileinrichtung mit dem zweiten Anschluss an der Umschalt-Ventileinrichtung verbunden ist, dass eine zweite Steuerkammer der Umschalt-Ventileinrichtung mit dem dritten Anschluss an der Umschalt-Ventileinrichtung verbunden ist, und dass zwischen dem zweiten Anschluss und dem dritten Anschluss an der Umschalt-Ventileinrichtung jeweils ein zum zweiten Anschluss an der Umschalt-Ventileinrichtung hin sperrendes Rückschlagventil angeordnet ist.

Das Magnetventil dient demnach ausschließlich zum pneumatischen Ansteuern der Umschalt-Ventileinrichtung sowie zum Beaufschlagen des Kolbens des Relaisventils, was nur mit einem geringen Druckluftverbrauch verbunden ist und somit keine großen Nennweiten im Magnetventil erfordert. Das Magnetventil kann somit in seiner Baugröße gegenüber bekannten Magnetventilen für ASR/ESC-Modulatoren verkleinert ausgebildet sein und lässt sich dadurch mit geringeren Kosten fertigen. Des Weiteren dient die Umschalt-Ventileinrichtung nur zum Ansteuern der Steuerkammer des pneumatischen Relaisventils, welches den Durchfluss des Vorratsdrucks proportional zum Steuerdruck moduliert und in der ASR/ESC-Funktion den Vorratsdruck zu der jeweiligen Radbremse durchleitet oder die jeweilige Radbremse entlüftet, so dass nur in dem pneumatischen Relaisventil entsprechend große Nennweiten erforderlich sind. Dementsprechend lässt sich die Umschalt-Ventileinrichtung vorteilhafterweise baulich mit einem zur Steuerung der ASR/ESC-Funktionen elektronisch geregelten ASR/ESC-Modulator baulich vereinigen.

Die Umschalt-Ventileinrichtung lässt sich baulich vergleichsweise einfach ausbilden, wenn sie einen als metallverstärktes oder kunststoffverstärktes Elastomer-Bauteil ausgebildeten topfförmigen Ventil-Umschaltkörper mit einem im Wesentlichen ebenen, eine eingebettete Metallverstärkung oder Kunststoffverstärkung in Form einer Scheibe aufweisenden Boden und eine zylindrische Seitenwand bildende Dichtlippe aufweist, wobei die Dichtlippe verschiebbar eine Gleitfläche an einem zylindrischem Fortsatz an einem zylindrischen Gehäuse dichtend umfasst und einen mit Vorratsdruck über den zweiten Anschluss beaufschlagbaren Druckraum begrenzt, eine dem Druckraum abgewandte Bodenfläche mit Steuerdruck über den ersten Anschluss beaufschlagbar ist, und der dritte Anschluss in einen den Ventil-Umschaltkörper umgebenden Ringraum mündet, der je nach Stellung des Ventil-Umschaltkörpers mit dem ersten Anschluss oder dem zweiten Anschluss verbindbar ist.

Eine ähnliche Umschalt-Ventileinrichtung ist in der DE 101 58 065 A1 der Anmelderin offenbart, sie dient dort jedoch als Redundanzdruck-Umschaltventil und wirkt dementsprechend mit anderen Komponenten einer elektronisch-pneumatischen Bremsanlage zusammen.

Die Erfindung wird nachstehend anhand eines in der Zeichnung dargestellten Ausführungsbeispiels weiter erläutert. In der Zeichnung zeigt
Fig. 1 ein Blockschaltbild eines in Form eines ASR/ESC-Modulators ausgeführten Bremsdruckmodulators in der Stellung einer normalen Betriebsbremsung,
Fig. 2 das Blockschaltbild des in Form eines ASR/ESC-Modulators ausgeführten Bremsdruckmodulators in der Stellung einer ASR/ESC-Bremsung,
Fig. 3 ein Schnittbild der mit dem Magnetventil baulich vereinigten Umschalt-Ventileinrichtung, und
Fig. 4 ein vergrößertes Schnittbild der Umschalt-Ventileinrichtung in einem anderen Anwendungsbeispiel.

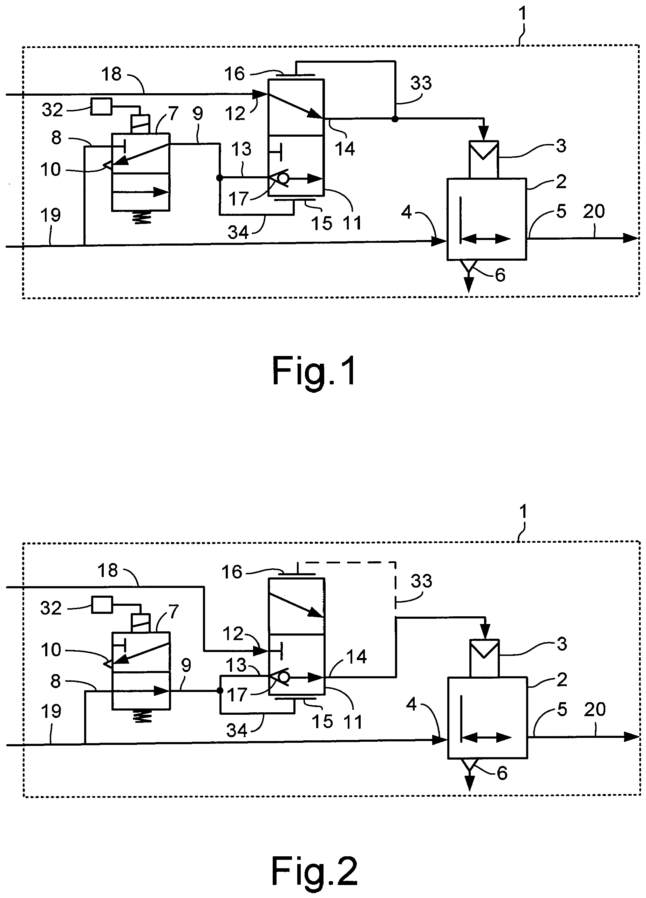

Die in den Figuren 1 und 2 dargestellten Blockschaltbilder eines ASR/ESC-Modulators 1 sind Teil einer im Einzelnen nicht dargestellten elektronisch-pneumatischen Bremsanlage, wie sie beispielsweise aus der eingangs erwähnten Firmendruckschrift entnehmbar ist. Der ASR/ESC-Modulator 1 umfasst ein in elektronisch-pneumatischen Bremsanlagen allgemein eingesetztes pneumatisches Relaisventil 2 mit einem ersten Anschluss 4 als Eingang für einen über eine Vorratsdruckleitung 19 zugeführten Vorratsdruck aus einer Druckversorgung, einen zweiten Anschluss 5 als Ausgang für eine zu einer Radbremse führenden Radbremsdruckleitung 20, und einen dritten Anschluss 6, der als Entlüftungsausgang einer zugeordneten Radbremse dient und über die Radbremsdruckleitung 20 gespeist wird. Mittels seiner Steuerkammer 3 lässt sich das pneumatische Relaisventil 2 auf Durchlass für den Vorratsdruck in modulierter oder in unmodulierter Form vom ersten Anschluss 4 zum zweiten Anschluss 5 oder zur Entlüftung der Radbremsdruckleitung 20 vom zweiten Anschluss 5 zum dritten Anschluss 6 betätigen. Dieses Betätigen des Relaisventils 2 geschieht pneumatisch mittels eines Magnetventils 7 oder mit dem ausgesteuerten Druck eines Fußbremsventils sowie mittels einer Umschalt-Ventileinrichtung 11.

Das Magnetventil 7 wird von einer Steuereinheit 32 in bekannter Weise elektrisch angesteuert. Es weist einen ersten Anschluss 8 als Eingang für den Vorratsdruck auf und ist dementsprechend mit der Vorratsdruckleitung 19 in der in Fig. 1 gezeigten ersten Schaltstellung des Magnetventils 7 verbunden. Ein zweiter Anschluss 9 am Magnetventil 7 dient als Ausgang für den Vorratsdruck und ist in der in Fig. 1 gezeigten ersten Schaltstellung mit einem zweiten Anschluss 13 der Umschalt-Ventileinrichtung 11 sowie über eine Leitung 34 mit einer ersten Steuerkammer 15 der Umschalt-Ventileinrichtung 11 verbunden. Ein erster Anschluss 12 der Umschalt-Ventileinrichtung 11 dient in der in Fig. 1 gezeigten ersten Schaltstellung als Eingang für einen von einem nicht dargestellten Fahrzeugbremsventil über eine Steuerdruckleitung 18 zugeführten Steuerdruck, während ein dritter Anschluss 14 der Umschalt-Ventileinrichtung 11 als Ausgang für den Steuerdruck oder den Vorratsdruck dient und zur Steuerkammer 3 des Relaisventils 2 führt. Der dritte Anschluss 14 der Umschalt-Ventileinrichtung 11 ist über eine Leitung 33 auch mit einer zweiten Steuerkammer 16 der Umschalt-Ventileinrichtung 11 verbunden.

In der in Fig. 1 dargestellten Schaltstellung des ASR/ESC-Modulators 1, der einer normalen Betriebsbremsung entspricht, ist das Magnetventil 7 unbestromt, so dass dessen erster Anschluss 8 gesperrt und die erste Steuerkammer 15 der Umschalt-Ventileinrichtung 11 über den zweiten Anschluss 9 des Magnetventils 7 sowie einem Entlüftungsanschluss 10 am Magnetventil 7 entlüftet ist. Da zwischen der Steuerkammer 3 des Relaisventils 2 und dem dritten Anschluss 14 der Umschalt-Ventileinrichtung 11 entweder der Steuerdruck der Steuerdruckleitung 18 über den ersten Anschluss 12 und den dritten Anschluss 14 der Umschalt-Ventileinrichtung 11 anliegt, oder, wie in Fig. 2 dargestellt, der Vorratsdruck in der Vorratsdruckleitung 19 über den Anschluss 8 und den Anschluss 9 des Magnetventils 7 sowie über den Anschluss 13 und den Anschluss 14 der Umschalt-Ventileinrichtung 11 in der Steuerkammer 3 anliegt, der auch in der in Fig. 1 gezeigten Stellung des Magnetventils 7 nicht abgebaut wird, befindet sich die Umschalt-Ventileinrichtung 11 stets in der in Fig. 1 gezeigten Stellung, wenn das Magnetventil 7 unbestromt ist. Dementsprechend lässt sich die Steuerkammer 3 des pneumatischen Relaisventils 2 mit dem Steuerdruck über die Steuerdruckleitung 18 sowie die Umschalt-Ventileinrichtung 11 beaufschlagen, wobei das Relaisventil 2 in bekannter Weise den über die Vorratsdruckleitung 19 zugeführten Vorratsdruck proportional zum Steuerdruck in der Steuerkammer 3 moduliert und diesen über die Radbremsdruckleitung 20 zu einer oder mehreren Radbremsen führt.

Bei der Durchführung einer ASR/ESC-Funktion wird das Magnetventil 7 bestromt und gelangt dadurch in die in Fig. 2 dargestellte Schaltstellung, in welcher der Vorratsdruck aus der Vorratsdruckleitung 19 über den Anschluss 8 und den Anschluss 9 des Magnetventils 7 zum zweiten Anschluss 13 der Umschalt-Ventileinrichtung 11 gelangt. Gleichzeitig wird die erste Steuerkammer 15 der Umschalt-Ventileinrichtung 11 vom Anschluss 9 des Magnetventils 7 über die Leitung 34 mit Vorratsdruck beaufschlagt, so dass die Umschalt-Ventileinrichtung 11 in die in Fig. 2 dargestellte Stellung gelangt, in welcher deren erster Anschluss 12 abgesperrt ist und eine Verbindung über ein Rückschlagventil 17 zwischen dem zweiten Anschluss 13 und dem dritten Anschluss 14 der Umschalt-Ventileinrichtung 11 besteht.

Somit gelangt der Vorratsdruck über den dritten Anschluss 14 der Umschalt-Ventileinrichtung 11 zur Steuerkammer 3 des pneumatischen Relaisventils 2, wodurch die Verbindung zwischen dem ersten Anschluss 4 und dem zweiten Anschluss 5 des pneumatischen Relaisventils 2 geöffnet wird, so dass der Vorratsdruck in voller Höhe über die Radbremsdruckleitung 20 einer oder mehreren Radbremsen zugeführt wird. Die Steuerdruckleitung 18 ist in der in Fig. 2 gezeigten Schaltstellung der Umschalt-Ventileinrichtung 11 abgesperrt.

Zwar besteht zwischen dem dritten Anschluss 14 und einer der ersten Steuerkammer 15 gegenüberliegenden zweiten Steuerkammer 16 der Umschalt-Ventileinrichtung 11 über die Leitung 33 eine Leitungsverbindung, so dass in der Schaltstellung der Fig. 2 der Vorratsdruck auch in die zweite Steuerkammer 16 der Umschalt-Ventileinrichtung 11 gelangt, jedoch bewirkt dies kein Umschalten der Umschalt-Ventileinrichtung 11, sofern die Wirkflächen in der ersten Steuerkammer 15 und in der zweiten Steuerkammer 16 gleich groß sind, oder die Wirkfläche in der zweiten Steuerkammer 16 größer als die in der ersten Steuerkammer 15 ist.

Da während der Durchführung einer ASR/ESC-Funktion der Vorratsdruck immer nur kurzzeitig auf eine oder mehrere Bremsen wirkt und dann die Radbremsdruckleitung 20 sofort wieder entlüftet werden soll, müssen das Magnetventil 7 und der Steuerdruck in der Steuerdruckleitung 18 durch die Steuerungseinheit 32 entsprechend angesteuert und verändert werden, so dass ein wechselweises Beaufschlagen einer oder mehrerer Radbremsen mit Vorratsdruck sowie ein nachfolgendes Entlüften erfolgt. Dies regelt in bekannter Weise die in der eingangs erwähnten Firmendruckschrift der Anmelderin erwähnte elektronische Steuereinheit des elektronisch-pneumatischen Bremssystems.

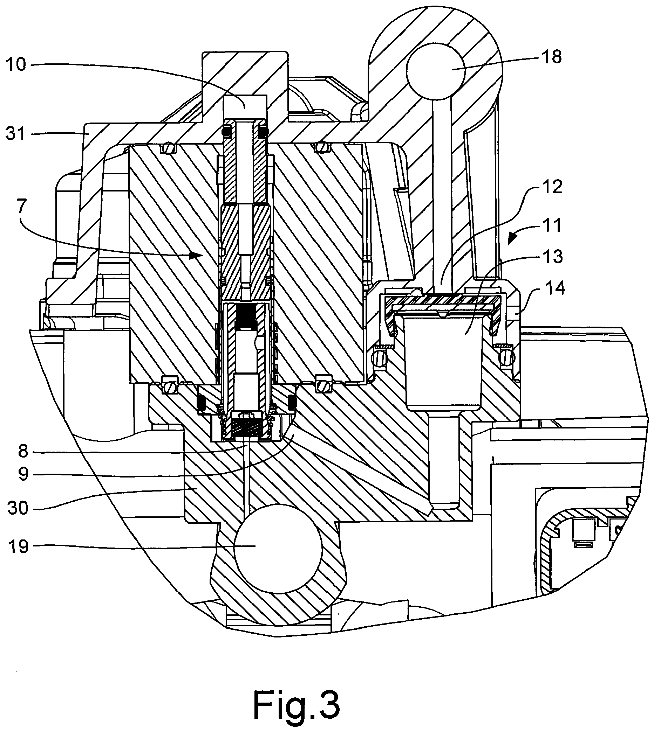

Aus den Figuren 1 und 2 ist ersichtlich, dass ausschließlich das pneumatische Relaisventil 2 die volle Nennweite für den Durchfluss des Vorratsdrucks aufweisen muss, während das Magnetventil 7 und die Umschalt-Ventileinrichtung 11 nur Nennweiten für die angelegten Steuerdrücke aufweisen müssen. Folglich lassen sich das Magnetventil 7 und die Umschalt-Ventileinrichtung 11 gegenüber bekannten technischen Lösungen in ihrer Baugröße erheblich verkleinern und zu einer Baueinheit zusammenfassen. Dies ist in Fig. 3 dargestellt.

In einem nicht vollständig dargestellten Gehäuse, welches aus einem Gehäuseunterteil 30 und einem Gehäuseoberteil 31 besteht, sind das Magnetventil 7 und die Umschalt-Ventileinrichtung 11 baulich vereinigt zusammengefasst. Der erste Anschluss 8 des Magnetventils 7 ist mit der Vorratsdruckleitung 19 verbunden, der zweite Anschluss 9 des Magnetventils 7 ist mit dem zweiten Anschluss 13 der Umschalt-Ventileinrichtung 11 verbunden, und der dritte Anschluss 10 des Magnetventils 7 ist ein Entlüftungsausgang. Der erste Anschluss 12 der Umschalt-Ventileinrichtung 11 ist mit der Steuerdruckleitung 18 verbunden und der dritte Anschluss 14 steht in nicht dargestellter Weise mit der Steuerkammer 3 des pneumatischen Relaisventils 2 in Verbindung.

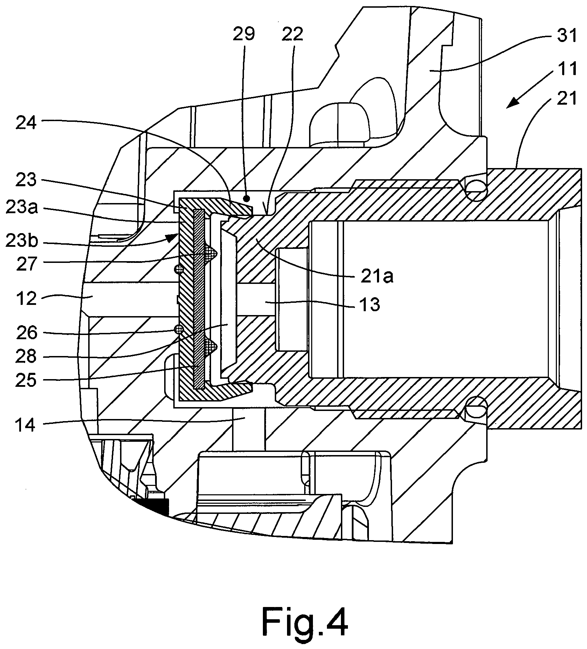

Gemäß Fig. 4 umfasst die Umschalt-Ventileinrichtung 11 ein zylindrisches Gehäuse 21, das in das Gehäuseoberteil 31 eingeschraubt ist. Zwischen dem ersten Anschluss 12 der Umschalt-Ventileinrichtung 11 im Gehäuseoberteil 31 und einem zylindrischen Fortsatz 21 a des zylindrischen Gehäuses 21 ist ein Ringraum 29 ausgebildet, in dem ein als topfförmiges Bauelement gestalteter Ventil-Umschaltkörper 23 axial beweglich angeordnet ist. Der Ventil-Umschaltkörper 23 besteht aus einem Boden 23a mit einer Bodenfläche 23b und einer hohlzylindrischen seitlichen Wand in Form einer umlaufenden elastischen Dichtlippe 24, die den zylindrischen Fortsatz 21 a am zylindrischen Gehäuse 21 abdichtend umgreift. Im Boden 23a des Ventil-Umschaltkörpers 23 ist in diesem Ausführungsbeispiel eine Metallverstärkung 25 in Form einer Metallscheibe eingeformt.

Die Abdichtung gegenüber dem ersten Anschluss 12 erfolgt durch eine an der Bodenfläche 23b des Ventil-Umschaltkörpers 23 angeformte sowie kreisförmig umlaufende Dichtlippe 26, während auf der axial gegenüberliegenden Seite der Bodenfläche 23b mehrere axial ausgerichtete Abstandshaltungselemente 27 angeordnet sind, welche bewirken, dass der zweite Anschluss 13 durch den Boden 23a nicht verschließbar ist.

In der dargestellten Stellung des Ventil-Umschaltkörpers 23 ist der erste Anschluss 12 der Umschalt-Ventileinrichtung 11 verschlossen. Wird der zweite Anschluss 13 der Umschalt-Ventileinrichtung 11 gemäß Fig. 2 mit Vorratsdruck beaufschlagt, bewirkt dieser Vorratsdruck ein radiales Aufweiten der umlaufenden Dichtlippe 24, und der Vorratsdruck gelangt zunächst in den Ringraum 29 und von dort durch den dritten Anschluss 14 der Umschalt-Ventileinrichtung 11 zur Steuerkammer 3 des pneumatischen Relaisventils 2.

Wenn umgekehrt der erste Anschluss 12 der Umschalt-Ventileinrichtung 11 mit Steuerdruck beaufschlagt ist, wird der Ventil-Umschaltkörper 23 axial in Richtung zum zweiten Anschluss 13 der Umschalt-Ventileinrichtung 11 verschoben und Steuerdruck gelangt über den ersten Anschluss 12 der Umschalt-Ventileinrichtung 11 in den Ringraum 29 und von dort durch den dritten Anschluss 14 der Umschalt-Ventileinrichtung 11 zur Steuerkammer 3 des pneumatischen Relaisventils 2, entsprechend der Darstellung in Fig. 1.

Somit entspricht der Druckraum 28 zwischen dem Ventil-Umschaltkörper 23 und dem zylindrischen Fortsatz 21 a der ersten Steuerkammer 15 der Umschalt-Ventileinrichtung 11 sowie die Bodenfläche 23b des Ventil-Umschaltkörpers 23 der zweiten Steuerkammer 16 der Umschalt-Ventileinrichtung 11. Hieraus folgt, dass bei Druckentlastung des Druckraums 28 der in dem Ringraum 29 herrschende Restdruck eine Verschiebung des Ventil-Umschaltkörpers 23 in Richtung des zweiten Anschlusses 13 der Umschalt-Ventileinrichtung 11 bewirkt sowie die Verbindung zwischen dem ersten Anschluss 12 und dem dritten Anschluss 14 der Umschalt-Ventileinrichtung 11 frei gibt. Daraus folgt, dass diejenige Stellung der Umschalt-Ventileinrichtung 11, wie sie in Fig. 1 dargestellt ist, stets eingenommen wird, wenn das Magnetventil 7 unbestromt ist, ohne dass Steuerdruck über die Steuerdruckleitung 18 an dem ersten Anschluss 12 der Umschalt-Ventileinrichtung 11 anstehen stehen muss.

Die an einer Gleitfläche 22 des zylindrischen Fortsatzes 21 a dichtend anliegende umlaufende Dichtlippe 24 wirkt als das in den Figuren 1 und 2 dargestellte Rückschlagventil 17, da sie zwar einen Durchfluss des Vorratsdrucks vom zweiten Anschluss 13 zum dritten Anschluss 14 der Umschalt-Ventileinrichtung 11 durch entsprechende radiale Aufweitung zulässt, einen Rückfluss vom dritten Anschluss 14 zum überdrucklosen Anschluss 13 der Umschalt-Ventileinrichtung 11 unter Aufrechterhaltung eines Druckes im Ringraum 29 aber verhindert.

Bei der Umschalt-Ventileinrichtung 11 handelt es sich somit um ein bistabiles Schaltelement, das bei bestromtem Magnetventil 7 gemäß Fig. 2 die in Fig. 4 dargestellte Stellung einnimmt sowie beibehält, und in der in Fig. 1 dargestellten unbestromten Situation des Magnetventils 7 eine Schaltstellung einnimmt, in welcher der Ventil-Umschaltkörper 23 in Richtung des zweiten Anschlusses 13 der Umschalt-Ventileinrichtung 11 axial verschoben ist und die Verbindung vom ersten Anschluss 12 zum dritten Anschluss 14 über den Ringraum 29 frei gibt.

Alle in der vorstehenden Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt, vielmehr sind alle Merkmalskombinationen als offenbart zu betrachten.

### Bezugszeichenliste (Bestandteil der Beschreibung)

- 1: ASR/ESC-Modulator
- 2: Pneumatisches Relaisventil
- 3: Steuerkammer am Relaisventil
- 4: Erster Anschluss am Relaisventil
- 5: Zweiter Anschluss am Relaisventil
- 6: Dritter Anschluss am Relaisventil
- 7: Magnetventil
- 8: Erster Anschluss am Magnetventil
- 9: Zweiter Anschluss am Magnetventil
- 10: Entlüftungsanschluss 10 am Magnetventil
- 11: Umschalt-Ventileinrichtung
- 12: Erster Anschluss an der Umschalt-Ventileinrichtung
- 13: Zweiter Anschluss an der Umschalt-Ventileinrichtung
- 14: Dritter Anschluss an der Umschalt-Ventileinrichtung
- 15: Erste Steuerkammer an der Umschalt-Ventileinrichtung
- 16: Zweite Steuerkammer an der Umschalt-Ventileinrichtung
- 17: Rückschlagventil
- 18: Steuerdruckleitung
- 19: Vorratsdruckleitung
- 20: Radbremsdruckleitung
- 21: Zylindrisches Gehäuse
- 21a: Zylindrischer Fortsatz
- 22: Gleitfläche
- 23: Ventil-Umschaltkörper
- 23a: Boden
- 23b: Bodenfläche
- 24: Umlaufende Dichtlippe
- 25: Metallverstärkung
- 26: Umlaufender Dichtwulst
- 27: Abstandshaltungselemente
- 28: Druckraum
- 29: Ringraum
- 30: Gehäuseunterteil
- 31: Gehäuseoberteil
- 32: Steuereinheit
- 33: Leitung zu Steuerkammer 16
- 34: Leitung zu Steuerkammer 15

## Patentansprüche

1. Elektronisch-pneumatische Bremsanlage für ein Fahrzeug, beispielsweise für einen Lastkraftwagen oder einen Lastzug, mit einem ASR/ESC-Modulator (1), mittels dem Steuerungsfunktionen für eine Antriebs-Schlupfregelung (ASR) und eine Fahrzeug-Stabilitätskontrolle (ESC) durchführbar sind, wobei der ASR/ESC-Modulator (1) ein pneumatisches Relaisventil (2), ein Magnetventil (7) und eine Umschalt-Ventileinrichtung (11) aufweist, **dadurch gekennzeichnet, dass** das Relaisventil (2) eine mit einem Ausgang (14) der Umschalt-Ventileinrichtung (11) verbundene Steuerkammer (3), einen ersten Anschluss (4) als pneumatischen Eingang für einen Vorratsdruck aus einer Druckversorgung, einen zweiten Anschluss (5) als pneumatischen Ausgang zu einer Radbremse und einen dritten Anschluss (6) als Entlüftungsausgang für die Radbremse aufweist, dass das Magnetventil (7) einen ersten Anschluss (8) als pneumatischen Eingang für den Vorratsdruck aus einer Druckversorgung, einen zweiten Anschluss (9) als pneumatischen Ausgang für den Vorratsdruck und einen dritten Anschluss (10) als pneumatischen Entlüftungsausgang aufweist, dass die Umschalt-Ventileinrichtung (11) einen ersten Anschluss (12) als pneumatischen Eingang, an den ein Steuerdruck einer Betriebsbremse der elektronisch-pneumatischen Bremsanlage anlegbar ist, einen zweiten Anschluss (13) als pneumatischen Eingang, an dem der Vorratsdruck aus einer Druckversorgung anlegbar ist, und einen dritten Anschluss (14) als pneumatischen Ausgang aufweist, über den der Steuerkammer (3) des Relaisventils (2) der Steuerdruck zur Bildung eines elektronisch geregelten, pneumatischen Radbremsdrucks oder der Vorratsdruck zugeführt wird, dass die Umschalt-Ventileinrichtung (11) zwei Schaltstellungen einnehmen kann, von denen die erste Schaltstellung den ersten, mit Steuerdruck beaufschlagten Anschluss (12) an der Umschalt-Ventileinrichtung (11) mit dem dritten Anschluss (14) an der Umschalt-Ventileinrichtung (11) verbindet, und von denen die zweite Schaltstellung den zweiten, über das Magnetventil (7) mit Vorratsdruck beaufschlagbaren Anschluss (13) an der Umschalt-Ventileinrichtung (11) mit dem dritten Anschluss (14) an der Umschalt-Ventileinrichtung (11) verbindet, dass das Magnetventil (7) so ausgebildet ist, dass es zur Ausführung einer ASR/ESC-Funktion aus seiner Ruhestellung in seine Betätigungsstellung geschaltet wird und dadurch die zweite Schaltstellung der Umschalt-Ventileinrichtung (11) zumindest zeitweise herbeiführt, dass das durch den Vorratsdruck beaufschlagte pneumatische Relaisventil (2) in der ersten Schaltstellung der Umschalt-Ventileinrichtung (11) den elektronisch geregelten oder von einem Fußbremsventil gesteuerten pneumatischen, zum Steuerdruck proportionalen Radbremsdruck erzeugt, sowie in der zweiten Schaltstellung der Umschalt-Ventileinrichtung (11) den Vorratsdruck als Radbremsdruck durchleitet, und dass eine erste Steuerkammer (15) an der Umschalt-Ventileinrichtung (11) mit dem zweiten Anschluss (13) an der Umschalt-Ventileinrichtung (11) verbunden ist, dass eine zweite Steuerkammer (16) der Umschalt-Ventileinrichtung (11) mit dem dritten Anschluss (14) an der Umschalt-Ventileinrichtung (11) verbunden ist, und dass zwischen dem zweiten Anschluss (13) und dem dritten Anschluss (14) an der Umschalt-Ventileinrichtung (11) jeweils ein zum zweiten Anschluss (13) an der Umschalt-Ventileinrichtung (11) hin sperrendes Rückschlagventil (17) angeordnet ist.

2. Bremsanlage nach Anspruch 1, **dadurch gekennzeichnet, dass** die Umschalt-Ventileinrichtung (11) mit einem zur Durchführung der ASR/ESC-Funktionen vorgesehenen ASR/ESC-Modulator (1) baulich vereinigt ist.

3. Bremsanlage nach Anspruch 2, **dadurch gekennzeichnet, dass** die Umschalt-Ventileinrichtung (11) einen als metallverstärktes Elastomer-Bauteil ausgebildeten Ventil-Umschaltkörper (23) mit einem im Wesentlichen ebenen, eine eingebettete Metallverstärkung (25) in Form einer Metallscheibe aufweisenden Boden (23a) und einer eine zylindrische Seitenwand bildenden Dichtlippe (24) aufweist, dass die Dichtlippe (24) verschiebbar eine Gleitfläche (22) an einem zylindrischen Fortsatz (21 a) an einem zylindrischen Gehäuse (21) dichtend umfasst sowie einen mit Vorratsdruck über den zweiten Anschluss (13) beaufschlagbaren Druckraum (28) begrenzt, dass eine dem Druckraum (28) abgewandte Bodenfläche (23b) des Ventil-Umschaltkörpers (23) mit Steuerdruck über den ersten Anschluss (12) beaufschlagbar ist, und dass der dritte Anschluss (14) in einen den Ventil-Umschaltkörper (23) umgebenden Ringraum (29) mündet, der je nach Stellung des Ventil-Umschaltkörpers (23) mit dem ersten Anschluss (12) oder dem zweiten Anschluss (13) verbindbar ist.

4. Bremsanlage nach Anspruch 2, **dadurch gekennzeichnet, dass** die Umschalt-Ventileinrichtung (11) einen als kunststoffverstärktes Elastomer-Bauteil ausgebildeten Ventil-Umschaltkörper (23) mit einem im Wesentlichen ebenen, eine eingebettete Kunststoffverstärkung (25) in Form einer Scheibe aufweisenden Boden (23a) und einer eine zylindrische Seitenwand bildenden Dichtlippe (24) aufweist, dass die Dichtlippe (24) verschiebbar eine Gleitfläche (22) an einem zylindrischen Fortsatz (21 a) an einem zylindrischen Gehäuse (21) dichtend umfasst sowie einen mit Vorratsdruck über den zweiten Anschluss (13) beaufschlagbaren Druckraum (28) begrenzt, dass eine dem Druckraum (28) abgewandte Bodenfläche (23b) des Ventil-Umschaltkörpers (23) mit Steuerdruck über den ersten Anschluss (12) beaufschlagbar ist, und dass der dritte Anschluss (14) in einen den Ventil-Umschaltkörper (23) umgebenden Ringraum (29) mündet, der je nach Stellung des Ventil-Umschaltkörpers (23) mit dem ersten Anschluss (12) oder dem zweiten Anschluss (13) verbindbar ist.

## Claims

1. Electronic-pneumatic braking system for a vehicle, for example for a heavy goods vehicle or an articulated truck, comprising a TCS/ESC modulator (1), by means of which control functions for a traction control system (TCS) and a vehicle stability control system (ESC) can be carried out, wherein the TCS/ESC modulator (1) comprises a pneumatic relay valve (2), a solenoid valve (7) and a changeover valve device (11), **characterized in that** the relay valve (2) has a control chamber (3), which is connected to an outlet (14) of the changeover valve device (11), a first port (4) as a pneumatic inlet for a supply pressure from a pressure supply device, a second port (5) as a pneumatic outlet leading to a wheel brake, and a third port (6) as a venting outlet for the wheel brake, **in that** the solenoid valve (7) has a first port (8) as a pneumatic inlet for the supply pressure from a pressure supply device, a second port (9) as a pneumatic outlet for the supply pressure, and a third port (10) as a pneumatic venting outlet, **in that** the changeover valve device (11) has a first port (12) as a pneumatic inlet, to which a control pressure of a service brake of the electronic-pneumatic braking system can be applied, a second port (13) as a pneumatic inlet, to which the supply pressure from a pressure supply device can be applied, and a third port (14) as a pneumatic outlet, via which the control pressure for the formation of an electronically controlled pneumatic wheel brake pressure or the supply pressure is fed to the control chamber (3) of the relay valve (2), **in that** the changeover valve device (11) can adopt two control positions, of which the first control position connects the first port (12) of the changeover valve device (11), which is supplied with control pressure, to the third port (14) of the changeover valve device (11), and of which the second control position connects the second port (13) of the changeover valve device (11), which can be supplied with supply pressure via the solenoid valve (7), to the third port (14) of the changeover valve device (11), **in that** the solenoid valve (7) is designed in such a way that it is switched from its rest position into its actuating position in order to perform a TCS/ESC function and thereby at least temporarily brings about the second control position of the changeover valve device (11), **in that**, in the first control position of the changeover valve device (11), the pneumatic relay valve (2), which is supplied with the supply pressure, produces the pneumatic wheel brake pressure, which is electronically controlled or controlled by a foot brake valve and is proportional to the control pressure, and, in the second control position of the changeover valve device (11), allows the supply pressure through as wheel brake pressure, and **in that** a first control chamber (15) of the changeover valve device (11) is connected to the second port (13) of the changeover valve device (11), **in that** a second control chamber (16) of the changeover valve device (11) is connected to the third port (14) of the changeover valve device (11), and **in that** a check valve (17), which in each case blocks flow to the second port (13) of the changeover valve device (11), is arranged between the second port (13) and the third port (14) of the changeover valve device (11).

2. Braking system according to Claim 1, **characterized in that** the changeover valve device (11) is combined structurally with a TCS/ESC modulator (1) provided for performing the TCS/ESC functions.

3. Braking system according to Claim 2, **characterized in that** the changeover valve device (11) has a valve changeover body (23), designed as a metal-reinforced elastomer component, having a substantially flat bottom (23a) that has an embedded metal reinforcement (25) in the form of a metal disk and having a sealing lip (24), which forms a cylindrical side wall, **in that** the sealing lip (24) slidably and sealingly surrounds a sliding surface (22) on a cylindrical extension (21a) on a cylindrical housing (21) and delimits a pressure space (28) that can be supplied with supply pressure via the second port (13), **in that** a bottom surface (23b) of the valve changeover body (23) which faces away from the pressure space (28) can be supplied with control pressure via the first port (12), and **in that** the third port (14) opens into an annular space (29), which surrounds the valve changeover body (23) and can be connected to the first port (12) or the second port (13), depending on the position of the valve changeover body (23).

4. Braking system according to Claim 2, **characterized in that** the changeover valve device (11) has a valve changeover body (23), designed as a plastic-reinforced elastomer component, having a substantially flat bottom (23a) that has an embedded plastic reinforcement (25) in the form of a disk and having a sealing lip (24), which forms a cylindrical side wall, **in that** the sealing lip (24) slidably and sealingly surrounds a sliding surface (22) on a cylindrical extension (21a) on a cylindrical housing (21) and delimits a pressure space (28) that can be supplied with supply pressure via the second port (13), **in that** a bottom surface (23b) of the valve changeover body (23) which faces away from the pressure space (28) can be supplied with control pressure via the first port (12), and **in that** the third port (14) opens into an annular space (29), which surrounds the valve changeover body (23) and can be connected to the first port (12) or the second port (13), depending on the position of the valve changeover body (23).

## Revendications

1. Installation électronique-pneumatique de freinage pour véhicule, par exemple pour camion ou remorque, présentant un modulateur ASR/ESC (1) qui exécute des fonctions de commande de régulation la dérive d'entraînement (ASR) et de contrôle de la stabilité du véhicule (ESC),
le modulateur ASR/ESC (1) présentant une soupape pneumatique de relais (2), une soupape magnétique (7) et un dispositif (11) de soupape de commutation, **caractérisée en ce que**
la soupape de relais (2) présente une chambre pilote (3) reliée à une sortie (14) du dispositif (11) de soupape de commutation, un premier raccordement (4) qui sert d'entrée pneumatique pour la pression de réserve d'une alimentation sous pression, un deuxième raccordement (5) qui sert de sortie pneumatique vers un frein de roue et un troisième raccordement (6) qui sert de sortie d'évacuation d'air pour le frein de roue,
**en ce que** la soupape magnétique (7) présente un premier raccordement (8) qui sert d'entrée pneumatique pour la pression de réserve d'une alimentation sous pression, un deuxième raccordement (9) qui sert de sortie pneumatique pour la pression de réserve et un troisième raccordement (10) qui sert de sortie pneumatique d'évacuation d'air,
**en ce que** le dispositif (11) de soupape de commutation présente un premier raccordement (12) qui sert d'entrée pneumatique et sur lequel une pression pilote d'un frein de fonctionnement de l'installation électronique-pneumatique de frein peut être appliquée, un deuxième raccordement (13) qui sert d'entrée pneumatique et sur lequel la pression de réserve d'une alimentation sous pression peut être appliquée et un troisième raccordement (14) qui sert de sortie pneumatique et par lequel la pression pilote formant une pression pneumatique de frein de roue régulée électroniquement ou la pression de réserve est apportée à la chambre pilote (3) de la soupape de relais (2),
**en ce que** le dispositif (11) de soupape de commutation peut prendre deux positions de commutation dont la première relie le premier raccordement (12) du dispositif (11) de soupape de commutation, sur lequel est appliquée la pression pilote, au troisième raccordement (14) du dispositif (11) de soupape de commutation et dont la deuxième relie le deuxième raccordement (13) du dispositif (11) de soupape de commutation sur lequel la pression de réserve est appliquée par l'intermédiaire de la soupape magnétique (13) au troisième raccordement (14) du dispositif (11) de soupape de commutation,
**en ce que** la soupape magnétique (7) est configurée de manière à être commutée de sa position de repos à sa position d'actionnement pour exécuter une fonction ASR/ESC et ainsi amener le dispositif (11) de soupape de commutation une partie du temps dans sa deuxième position de commutation,
**en ce que** dans la première position de commutation du dispositif (11) de soupape de commutation, la soupape pneumatique de relais (2) sur laquelle est appliquée la pression de réserve forme la pression pneumatique de frein de roue, proportionnelle à la pression pilote et commandée par une soupape de pédale de frein et dans la deuxième position de commutation du dispositif (11) de soupape de commutation, laisse passer la pression de réserve en tant que pression de frein de roue,
**en ce qu'**une première chambre pilote (15) du dispositif (11) de soupape de commutation est reliée au deuxième raccordement (13) du dispositif (11) de soupape de commutation,
**en ce qu'**une deuxième chambre pilote (16) du dispositif (11) de soupape de commutation est reliée au troisième raccordement (14) du dispositif (11) de soupape de commutation et
**en ce qu'**entre le deuxième raccordement (13) et le troisième raccordement (14) du dispositif (11) de soupape de commutation est disposée une soupape anti-retour (17) qui bloque le passage vers le deuxième raccordement (13) du dispositif (11) de soupape de commutation.

2. Installation de freinage selon la revendication 1, **caractérisée en ce que** le dispositif (11) de soupape de commutation est réuni structurellement à un modulateur ASR/ESC (1) prévu pour exécuter les fonctions ASR/ESC.

3. Installation de freinage selon la revendication 2, **caractérisée en ce que** le dispositif (11) de soupape de commutation présente un corps (23) de commutation de soupape configuré comme composant en élastomère renforcé de métal, avec un fond (23a) essentiellement plan dans lequel est incorporé un renfort métallique (25) qui présente la forme d'une plaque métallique et une lèvre d'étanchéité (24) qui forme une paroi latérale cylindrique,
**en ce que** la lèvre d'étanchéité (24) coulissante comprend une surface de glissement (22) prévue sur un appendice cylindrique (21a) et assurant l'étanchéité par rapport à un boîtier cylindrique (21) et délimite un espace (28) sous pression sur lequel la pression de réserve peut être appliquée par l'intermédiaire du deuxième raccordement (13),
**en ce que** la pression pilote peut être appliquée par l'intermédiaire du premier raccordement (12) sur une surface de fond (23b), non tournée vers l'espace (28) sous pression, du corps (23) de commutation de soupape et
**en ce que** le troisième raccordement (14) débouche dans un espace annulaire (29) qui entoure le corps (23) de commutation de soupape et peut être relié au premier raccordement (12) ou au deuxième raccordement (13) selon la position du corps (23) de commutation de soupape.

4. Installation de freinage selon la revendication 2, **caractérisée en ce que** le dispositif (11) de soupape de commutation présente un corps (23) de commutation de soupape configuré comme composant en élastomère renforcé de matière synthétique, avec un fond (23a) essentiellement plan dans lequel est incorporé un renfort (25) en matière synthétique qui présente la forme d'une plaque et une lèvre d'étanchéité (24) qui forme une paroi latérale cylindrique,
**en ce que** la lèvre d'étanchéité (24) coulissante comprend une surface de glissement (22) prévue sur un appendice cylindrique (21a) et assurant l'étanchéité par rapport à un boîtier cylindrique (21) et délimite un espace (28) sous pression sur lequel la pression de réserve peut être appliquée par l'intermédiaire du deuxième raccordement (13),
**en ce que** la pression pilote peut être appliquée par l'intermédiaire du premier raccordement (12) sur une surface de fond (23b), non tournée vers l'espace (28) sous pression, du corps (23) de commutation de soupape et
**en ce que** le troisième raccordement (14) débouche dans un espace annulaire (29) qui entoure le corps (23) de commutation de soupape et peut être relié au premier raccordement (12) ou au deuxième raccordement (13) selon la position du corps (23) de commutation de soupape.
